# EUROPEAN PATENT SPECIFICATION

(11) **EP 3 241 714 B1**
(45) Date of publication and mention of the grant of the patent: **21.10.2020**
(21) Application number: 15874633.9
(22) Date of filing: 02.02.2015
(51) Int. Cl.: B61F 5/10, B61F 5/08

(54) **AIR SPRING FOR RAIL TRANSIT**
LUFTFEDER FÜR SCHIENENVERKEHR
RESSORT PNEUMATIQUE POUR TRANSPORT FERROVIAIRE

(30) Priority: 31.12.2014 CN 201410851340
(43) Date of publication of application: 08.11.2017
(73) Proprietor: Zhuzhou Times New Material Technology Co., Ltd. (China Corporation), Tianyuan District Zhuzhou, Hunan 412007 (CN)
(72) Inventor: CHEN, Canhui, Zhuzhou Hunan 412007 (CN); CHEN, Wenhai, Zhuzhou Hunan 412007 (CN); LIU, Zhihe, Zhuzhou Hunan 412007 (CN); YE, Te, Zhuzhou Hunan 412007 (CN); CHENG, Haitao, Zhuzhou Hunan 412007 (CN)
(74) Representative: Gill Jennings & Every LLP
(86) International application number: PCT/CN2015/072110
(87) International publication number: WO 2016/106940

(56) References cited:
- EP-A1- 1 726 505
- EP-A1- 2 251 562
- CN-U- 201 437 362
- CN-U- 203 335 719
- CN-U- 203 604 522
- CN-U- 204 309 790
- FR-A- 1 395 426
- FR-A1- 2 502 089
- JP-A- 2008 302 902
- JP-A- 2012 180 913
- US-A1- 2014 117 597

## Description

The present application claims the priority to Chinese Patent Application No. 201410851340.5, titled "AIR SPRING FOR RAIL TRANSIT", filed on December 31, 2014 with the State Intellectual Property Office of People's Republic of China.

### TECHNICAL FIELD

The present application relates to the technical field of rail transit, and more particularly to an air spring for rail transit.

### BACKGROUND

An air spring generally refers to a spring which has a telescopic airtight container inflated with compressed air and utilizes the elastic action of the air. In a secondary suspension device of a rail transit vehicle, the air spring, as an important component, is mounted between a car body and a bogie for transmitting a vertical load as well as withstanding deformations in vertical and horizontal directions. By the rigidity property of the air spring, the operation dynamic characteristic and riding comfort can be provided for vehicles. When the air spring is in an inflated state, the air spring, with the cooperation of a height adjusting valve, can effectively guarantee uniform floor height for the vehicle under different loads. When the air spring is in an airless state, the car body may sink and the dynamic characteristic is provided by an auxiliary spring.

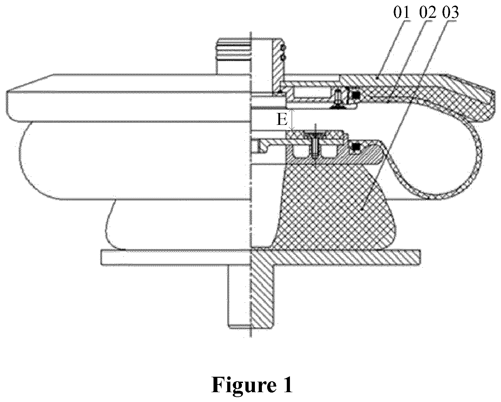

In the conventional technology, the air spring for rail transit generally includes an air bag and an auxiliary spring. Reference is made to Figure 1, which is a schematic view showing the structure of a common air spring for rail transit in the conventional technology.

The above air spring for rail transit includes an upper plate 01, an air bag 02 and an hourglass shaped spring 03, and an airtight space is defined by the three components. Therefore, in an inflated state, a car body load is transmitted from the upper plate 01 to the air bag 02 and then is transmitted downwards to the hourglass shaped spring 03. A distance between a bottom surface of the upper plate and a top surface of the hourglass shaped spring assembly is a space gap indicated by E in the Figure, and the space gap is generally set when the vehicle is unloaded. In the airless state, since the air bag 02 cannot bear the load, the upper plate 01 directly falls onto the hourglass shaped spring assembly, i.e., the above space gap becomes zero, and the car body load is directly transmitted from the upper plate 01 to the hourglass shaped spring 03. Though the hourglass shaped spring 03 can meet the requirements of horizontal and vertical rigidities and avoid a derail risk when the vehicle turns in an airless state, since the rigidity of the hourglass shaped spring 03 is small relative to that of a stacking type auxiliary spring, in states such as the vehicle has a large load, the vehicle is apt to have a large downward displacement in a vertical direction. Besides, the total displacement of the hourglass shaped spring 03 in the vertical direction is the sum of a displacement of the hourglass shaped spring due to the vehicle load change and a vertical creep amount after the hourglass shaped spring 03 creeps. When the sum of the total displacement and the space gap exceeds an allowable maximum sinking amount of the vehicle, a danger is apt to occur, and for different vehicles, the above allowable maximum sinking amount generally varies according to situations such as a car body structure.

In conclusion, an issue to be addressed presently by those skilled in the art is to effectively address issue such as degradation of operation security of the vehicle caused by a possible large downward displacement of an air spring for rail transit.

EP-A-2251562 describes an air spring device includes an air spring wherein gas is filled in an interior defined by an upper face plate, a lower face plate, as well as a cylindrical flexible diaphragm body having opposite ends gas-tightly connected to the upper and lower face plates, respectively. Between the lower face plate and a lower supporting plate spaced downward therefrom, a shear spring means and a compression spring means are series-connected, which are made mainly of rubber material. When a vertical load is applied to the air spring device, the shear spring means and the compression spring means are subjected mainly to shearing deformation and compressive deformation, respectively. The air spring device further includes an abutment member allowing the compression spring means to support the load in place of the shear spring means, after the deformation amount of the shear spring means reaches a predetermined level.

JP-A-2008302902 describes an air spring for railway vehicle having an air spring portion a formed by providing a rubber diaphragm over from an upper support portion on a vehicle body side to a lower support portion on a bogie side, an abutting member capable of moving downward so as to receive the upper support portion lowering with breakdown of the air spring portion a is arranged under the upper support portion, and a shearing elastic mechanism formed by interposing an elastic body over from the outer peripheral part formed in any one of the abutting member and the lower support portion to the inner peripheral part formed in the other thereof in the state of arranging outside in the radial direction of the outer peripheral part provided, and set so that, when the abutting member receives the upper support portion and the abutting member and the lower support portion are moved close to each other in the vertical direction, the elastic body abuts on the abutting member or the lower support portion in order from one end to the other end of the elastic body in the radial direction thereof.

US 2014/117597 discloses an air spring for rail transit, comprising an upper plate connected to the car body, an air bag hermetically connected to the upper plate, an hourglass shaped spring assembly hermetically connected to the air bag, whereby the shape of the hourglass shaped spring is a smooth camber, which has a small upper end, and extends downwards gradually to a largest portion, and then is further gradually diminished to wards a bottom end.

### SUMMARY

In view of this, an object of the present application is to provide an air spring for rail transit, which can effectively address the issue of degradation of operation security of a vehicle caused by a large downward displacement of a car body.

To achieve the above object, the following technical solution is provided according to the present application.

An air spring for rail transit comprising: an upper plate fixedly connectable to a car body; and an air bag hermetically fixedly connected to the upper plate; and further comprising: an hourglass shaped spring assembly hermetically connected to the air bag, wherein the hourglass shaped spring assembly comprises an hourglass shaped spring and a position-limiting component arranged inside the hourglass shaped spring, the shape of the hourglass shaped spring is a smooth camber, which has a small upper end, and extends downwards gradually to a largest portion, and then is further gradually diminished towards a bottom end, and the position-limiting component comprises a hard boss extending downwards; and the hard boss has a height less than a height of the hourglass shaped spring, a height difference between the hard boss and the hourglass shaped spring is a stop gap of the hourglass shaped spring assembly, a gap between the upper plate and the hourglass shaped spring assembly is a space gap, and the sum of the space gap and the stop gap of the hourglass shaped spring assembly can be configured to be equal to a maximum sinking amount that the car body is allowed.

Preferably, in the air spring for rail transit, the position-limiting component further includes an upper end plate arranged on a top surface of the hourglass shaped spring, the upper end plate is hermetically connected to the air bag, and the upper end plate is fixedly connected to the hard boss.

Preferably, in the air spring for rail transit, a lower surface of the upper end plate is inclined downwards from an edge to the center.

Preferably, in the air spring for rail transit, the upper end plate is a separated structure, including a first part hermetically connected to the air bag and a second part connected to the hourglass shaped spring, and the first part is fixedly connected to the second part.

Preferably, in the air spring for rail transit, an axisymmetric cavity is provided at a bottom of the hourglass shaped spring, and a lower end of the hard boss extends to the cavity, and the cavity is symmetrical with respect to the axis of the hourglass shaped spring.

Preferably, the air spring for rail transit further includes a bottom plate configured to support the hourglass shaped spring, and the bottom plate is connected to a bogie.

Preferably, the air spring for rail transit further includes a lower end plate provided between the bottom plate and the hourglass shaped spring.

Preferably, in the air spring for rail transit, the lower end plate is provided with a through hole, and the through hole has a size and a shape which are the same as those of a bottom end of the cavity, and the bottom plate is provided with a vent in communication with the cavity.

Preferably, in the air spring for rail transit, an upper surface of the lower end plate is inclined downwards from an edge to the center, and a bottom surface of the hourglass shaped spring and the upper surface of the lower end plate fit together.

Preferably, in the air spring for rail transit, the position-limiting component and the hourglass shaped spring are connected by vulcanization, and the lower end plate and the hourglass shaped spring are connected by vulcanization.

The air spring for rail transit according to the present application includes the upper plate fixedly connected to the car body; and the air bag hermetically fixedly connected to the upper plate; and further including the hourglass shaped spring assembly hermetically connected to the air bag. The hourglass shaped spring assembly includes the hourglass shaped spring and the position-limiting component arranged inside the hourglass shaped spring. The position-limiting component includes the hard boss extending downwards; and the hard boss has a height less than a height of the hourglass shaped spring, the height difference between the hard boss and the hourglass shaped spring is the stop gap of the hourglass shaped spring assembly, the gap between the upper plate and the hourglass shaped spring assembly is the space gap, and the sum of the space gap and the stop gap of the hourglass shaped spring assembly is equal to the maximum sinking amount that the car body is allowed.

With the air spring for rail transit according to the present application, when the air bag is inflated, the upper plate is supported by the air bag, thus further supporting the car body. After the air bag is deflated, i.e., is in an airless state, the space gap becomes zero, the upper plate is mainly supported by the hourglass shaped spring assembly, and the load of the car body is directly transmitted from the upper plate to the hourglass shaped spring assembly. Further, since in the hourglass shaped spring assembly, the height of the position-limiting component is less than the height of the hourglass shaped spring, the hourglass shaped spring can be compressed, therefore, as the load of the car body increases and the hourglass shaped spring creeps, the height of the upper plate gradually decreases. When the hourglass shaped spring assembly is compressed to an extent that it cannot be further compressed due to the supporting effect of the position-limiting component, that is, when the stop gap of the hourglass shaped spring assembly is reached, the upper plate cannot further sink either, thus effectively controlling the sinking extent of the car body to be within a certain range, avoiding the hazard caused by an overlarge sinking extent of the car body, and improving the safety of the vehicle operation.

Further, the air spring for rail transit according to the present application has good and low rigidity and a strong displacement capability, and also has a simple and compact structure, is easy to assemble, and requires a small mounting space.

In a preferred embodiment, the position-limiting component of the air spring for rail transit according to the present application further includes an upper end plate arranged on a top surface of the hourglass shaped spring, and the upper end plate is connected to the air bag in a sealed manner, and the upper end plate is fixedly connected to the hard boss, and a lower surface of the upper end plate is inclined downwards form an end where it contacts with an outer edge of the hourglass shaped spring to an end where an outer edge of the hard boss is located. By the inclined arrangement, when the vehicle passes through a turnoff, a curve, the air spring system may be steadier under a horizontal load.

### BRIEF DESCRIPTION OF THE DRAWINGS

For more clearly illustrating embodiments of the present application or the technical solutions in the conventional technology, drawings referred to describe the embodiments or the conventional technology will be briefly described hereinafter. Apparently, the drawings in the following description are only examples of the present application, and for the person skilled in the art, other drawings may be obtained based on the drawings without any creative efforts.
Figure 1 is a schematic view showing the structure of a common air spring for rail transit in the conventional technology; and
Figure 2 is a schematic view showing the structure of an air spring for rail transit according to an embodiment of the present application.

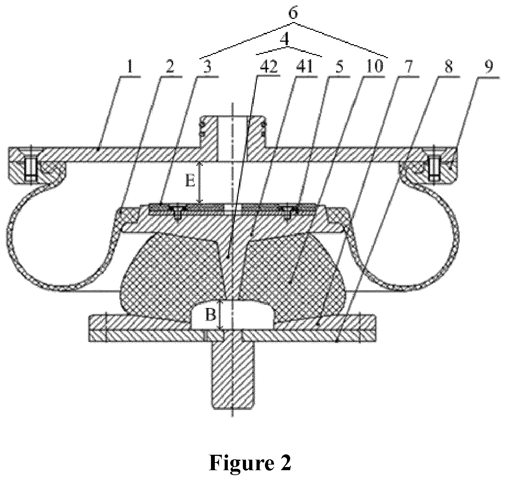

**Reference numerals in Figures 1 and 2:**

| | | | |
|---|---|---|---|
| 01 | upper plate, | 02 | air bag, |
| 03 | hourglass shaped spring; | | |
| 1 | upper plate, | 2 | air bag, |
| 3 | wearing plate, | 4 | position-limiting component, |
| 5 | support plate, | 6 | hourglass shaped spring assembly, |
| 7 | lower end plate, | 8 | bottom plate, |
| 9 | snap ring, | 10 | hourglass shaped spring, |
| 41 | upper end plate, | 42 | hard boss |

### DETAILED DESCRIPTION OF THE EMBODIMENTS

An air spring for rail transit is disclosed according to embodiments of the present application, to prevent the air spring for rail transit from excessively displacing downwards, and improve the safety of operation of a vehicle.

The technical solutions in the embodiments of the present application will be described clearly and completely hereinafter in conjunction with the drawings in the embodiments of the present application. Apparently, the described embodiments are only one part of the embodiments of the present application, rather than all embodiments. Based on the embodiments in the present application, all of other embodiments, made by the person skilled in the art without any creative efforts, fall into the scope of the present application.

Reference is made to Figure 2, which is a schematic view showing the structure of an air spring for rail transit according to an embodiment of the present application.

In a specific embodiment, the air spring for rail transit according to the present application includes an upper plate 1, an air bag 2 and an hourglass shaped spring assembly 6.

The upper plate 1 is fixedly connected to a car body to transmit the weight of the car body to the air spring. The upper plate 1, the air bag 2 and the hourglass shaped spring 6 are hermetically connected to form an airtight cavity, thus, when the air bag 2 is inflated, the car body is mainly supported by the air bag 2. The specific structures of the upper plate 1 and the air bag 2 may refer to the conventional technology, which are not described further herein, and the upper plate 1 can be fixedly connected to the air bag 2 hermetically by a snap ring 9. A gap between the upper plate 1 and the hourglass shaped spring assembly 6 is a space gap, as indicated by E in the Figure, and the space gap is generally set when the vehicle is unloaded.

The hourglass shaped spring assembly 6 includes an hourglass shaped spring 10, and the shape of the hourglass shaped spring 10 is generally a smooth camber, which has a small upper end, and extends downwards gradually to a largest portion, and then is further gradually diminished towards a bottom end. The hourglass shaped spring 10 with the above structure has good horizontal and vertical rigidities, which can meet the horizontal and vertical rigidity requirements of the vehicle when the air spring is in an airless state and reduce the hazard caused by an overlarge rigidity when the vehicle passes through a curve.

A position-limiting component 4 is provided in the hourglass shaped spring assembly 6, that is, the position-limiting component 4 is further provided inside the hourglass shaped spring 10. The position-limiting component 4 includes a hard boss 42 extending downwards, and the hard boss 42 has a height less than that of the hourglass shaped spring 10. The height difference between the hard boss 42 and the hourglass shaped spring 10 is a stop gap of the hourglass shaped spring assembly 6. The "extending downwards" here refers to that the hard boss 42 is arranged in a vertical direction, and may have a support effect on the car body. The "height difference" here is not a narrowly interpreted difference between absolute heights of the hourglass shaped spring 10 and the hard boss 42, but a distance by which the hourglass shaped spring assembly 6 can sink. Therefore, in an airless state, a load of the car body is directly transmitted from the upper plate 1 to the hourglass shaped spring assembly 6. Further, since the height of the position-limiting component 4 in the hourglass shaped spring assembly 6 is less than the height of the hourglass shaped spring 10, the hourglass shaped spring 6 can be compressed, therefore, with the load of the car body increases and the hourglass shaped spring creeps, the height of the upper plate 1 is gradually lowered. When the hourglass shaped spring assembly 6 is compressed to an extent that it cannot be further compressed due to the supporting effect of the position-limiting component 4, that is, when the stop gap of the hourglass shaped spring assembly 6 is reached, the upper plate 1 cannot further sink either, thus effectively controlling a sinking extent of the car body to be within a certain range. The stop gap of the hourglass shaped spring assembly 6 here, as indicated by B in the Figure, is just a maximum sinking amount or a vertical position-limiting amount of the hourglass shaped spring assembly 6, and is referred to as a maximum value by which the hourglass shaped spring assembly 6 can be compressed under the effect of the position-limiting component 4, rather than a maximum compression amount of the hourglass shaped spring 10 itself. The sum of the stop gap B of the hourglass shaped spring assembly 6 and the space gap E is equal to a maximum sinking amount that the car body is permitted, and for different vehicles, the requirements for the maximum sinking amount may be different. Therefore, the maximum sinking amount needs to be set according to different application environments of air springs for rail transit.

Specifically, the hard boss 42 may be an inverted truncated cone shape with an upper end having a large diameter and a lower end having a small diameter. Of course, the hard boss may also be arranged in a cylindrical shape or other shapes. Generally, the structure of the inverted truncated cone is steady when the air spring for rail transit is compressed under the gravity of the car body. That is, the hard boss 42 may be provided at the axis of the hourglass shaped spring assembly 6, and for the inverted truncated cone structure, the axis of the hard boss 42 is collinear with the axis of the hourglass shaped spring assembly 6. Of course, in the case that the number of the hard boss 42 is two, the hard bosses 42 may also be specifically arranged at symmetrical positions and other positions in the hourglass shaped spring assembly 6.

Several improvements may be further made to the air spring for rail transit according to the above embodiment.

Specifically, the position-limiting component 4 may be further provided with an upper end plate 41 fixedly connected to the hard boss 42, and the upper end plate 41 and the hard boss 42 are generally integrally formed, which of course may also be separate structures according to requirements and are connected by conventional fixed connection means such as welding. The upper end plate 41 is located on a top surface of the hourglass shaped spring 10. Two ends of the upper end plate 41 are hermetically connected to the air bag 2, thus forming a cavity for inflation together with the upper plate 1 and the air bag 2. It is to be noted that, the upper end plate 41 may also be further arranged in separate structures, i.e., including a first part hermetically connected to the air bag 2 and a second part connected to the hourglass shaped spring 10, and the two parts are connected together by conventional fixed connection means, for facilitating the detaching and mounting, detachable connection means such as riveting or bolting may be employed specifically. The position-limiting component 4 is mainly used for limiting a displacement of the car body to avoid the hazard caused by too large sinking extent of the car body, therefore the position-limiting component 4 may be metal parts. Of course, the position-limiting component 4 may also be configured as other parts made of other materials with a strength, etc. meeting the requirements.

For enabling the upper end plate 41 and the hourglass shaped spring 10 to be steadier in the sinking process when subjected to a force, a lower surface of the upper end plate 41 may specifically include a protrusion region, that is, the lower surface of the upper end plate 41 is inclined downwards from an outer edge to the center. Specifically, the case may be that the lower surface of the upper end plate 41 is inclined from a portion where the upper end plate 41 contacts with an outer edge of the hourglass shaped spring 10 to the hard boss 42. Correspondingly, an upper surface of the hourglass shaped spring 10 may be arranged according to an inclination angle of the lower surface of the upper end plate 41 to be closely fitted with the lower surface of the upper end plate 41. Specifically, the magnitude of the inclination angle may be set according to factors such as the rigidity of the hourglass shaped spring 10 and the operation conditions, which are not specifically limited herein. Of course, the lower surface of the upper end plate 41 may also be set as a plane.

An axisymmetric cavity may be provided at the bottom of the hourglass shaped spring 10, and the lower end of the hard boss 42 extends to the axisymmetric cavity, and the cavity is symmetrical with respect to the axis of the hourglass shaped spring assembly 6. By providing the cavity at the bottom of the hourglass shaped spring 10, the rigidity of the hourglass shaped spring 10 may be further adjusted to meet the requirements of the vehicle. Moreover, the lower end of the hard boss 42 extending to the axisymmetric cavity specifically may refer to that the lower end may be in flush with a bottom surface of the cavity or slightly higher than the bottom surface of the cavity. In the case that the position-limiting component 4 includes the upper end plate 41, since the position-limiting component 4 has a structure with a T-like shape overall, and the lower end of the hard boss 42 extends to the axisymmetric cavity, when the air bag 2 is airless, the hourglass shaped spring assembly 6 functions to support the car body, and when the car body sinks to reach the maximum sinking amount, the lower surface of the hard boss 42 abuts against a component under the hourglass shaped spring assembly 6 to have the stopping effect.

Further, a bottom plate 8 may be provided at a lower side of the hourglass shaped spring assembly 6, the bottom plate 8 is connected to a bogie of the vehicle, thus the weight of the car body is transmitted to the bogie via the bottom plate 8. In some cases, for example, a bottom plate connecting surface for connecting an air spring is a plane having a solid center part, the bottom plate 8 may also not be provided. A lower end plate 7 may further be provided between the bottom plate 8 and the hourglass shaped spring 10, and a through hole may be provided at a center position of the lower end plate 7, and the size and shape of the through hole may be generally configured to be coincident with the size and shape of a bottom end of the cavity in the bottom of the hourglass shaped spring 10, therefore, when the position-limiting component 4 sinks to abut against the bottom plate 8, a vertical displacement of the car body is limited. In this case, the height difference between the hard boss 42 and the hourglass shaped spring 10 refers to the distance B from the lower end surface of the hard boss 42 to the bottom plate 8, that is, the stop gap of the hourglass shaped spring assembly 6, the stop gap B added with the space gap E just corresponds to the maximum sinking amount that the car body is allowed. Specifically, the bottom plate 8 may be provided with a vent which is in communication with the axisymmetric cavity, therefore when the hourglass shaped spring 10 is compressed, the air in the buffer cavity may be discharged via the vent, thus preventing a large pressure generated due to the air being compressed from adversely affecting the stability of the overall structure. The bottom plate 8 and the lower end plate 7 may be fixedly connected by screws, and of course may also be connected by other conventional fixed connection means.

An upper surface of the lower end plate 7 may further be provided with a concave region, that is, the upper surface of the lower end plate 7 is inclined downwards from the edge to the center. Specifically, the upper surface of the lower end plate 7 may be gradually inclined downwards from a portion where it contacts with an outer edge of the hourglass shaped spring 10 to the center. The extent of inclination may be set according to factors such as the rigidity of the hourglass shaped spring 10 and the operation condition. Of course, the concave region may also not provided, and a plane structure can also function to support the hourglass shaped spring assembly 6, just the arrangement of the concave region enables the structure of the hourglass shaped spring assembly 6 to be more stable. Correspondingly, the bottom surface of the hourglass shaped spring 10 may be set according to the shape of the concave region, to allow joint surfaces of the both to have a reliable contact.

Further, the hourglass shaped spring assembly 6 may be provided with a wearing plate 3 and a support plate 5. For facilitating fixing and mounting of the wearing plate 3 and the support plate 5, an upper surface of the upper end plate 41 may be provided with a groove, and the wearing plate 3 is disposed in the groove, the support plate 5 is located below the wearing plate 3, that is, in a position between the wearing plate 3 and the upper end plate 41, to enable the wearing plate 3 to have a better loading condition. A depth of the groove should be set according to thicknesses of the wearing plate 3 and the support plate 5, to allow an upper surface of the wearing plate 3 to be higher than an entrance of the groove when the wearing plate 3 and the support plate 5 are disposed in the groove, that is, the wearing plate 3 protrudes from the groove in the upper end plate 41, thus the upper plate 1 may contact with the wearing plate 3 first when in an airless state. Of course, according to practical use requirements, the wearing plate 3 may also be separately arranged on the upper end plate 41.

For enabling the hourglass shaped spring assembly 6 to better exert the support and position-limiting effect, specifically, the hourglass shaped spring 10 and the position-limiting component 4 may be connected by vulcanization. Of course, the hourglass shaped spring 10 and the lower end plate 7 may also be connected by vulcanization. The hourglass shaped spring 10, the upper end plate 41 of the position-limiting component 4 and the hard boss 42 are vulcanized together, such that when the overall structure of the hourglass shaped spring assembly 6 is compressed and deformed under the pressure of the car body, the hard boss 42 can support and stop the car body more stably when reaching the maximum sinking amount that the car body is allowed, and is not apt to adversely affect the support effect due to being shifted, etc.. In the case that the upper end plate 41 of the position-limiting component 4 is a separated structure which is fixedly connected by fixed connection means such as riveting, simply the second part thereof is required to be vulcanized with the hourglass shaped spring 10, and another part may be hermetically connected to the air bag 2.

The above embodiments are described in a progressive manner. Each of the embodiments is mainly focused on describing its differences from other embodiments, and references may be made among these embodiments with respect to the same or similar portions among these embodiments.

## Claims

1. An air spring for rail transit, comprising:
an upper plate (1) fixedly connectable to a car body; and
an air bag (2) hermetically fixedly connected to the upper plate (1);
and further comprising:
an hourglass shaped spring assembly (6) hermetically connected to the air bag (2), wherein
the hourglass shaped spring assembly (6) comprises an hourglass shaped spring (10) and a position-limiting component (4) arranged inside the hourglass shaped spring (10), the shape of the hourglass shaped spring (10) is a smooth camber, which has a small upper end, and extends downwards gradually to a largest portion, and then is further gradually diminished towards a bottom end, and the position-limiting component (4) comprises a hard boss (42) extending downwards; and
the hard boss (42) has a height less than a height of the hourglass shaped spring (10), a height difference between the hard boss (42) and the hourglass shaped spring (10) is a stop gap of the hourglass shaped spring assembly (6), a gap between the upper plate (1) and the hourglass shaped spring assembly (6) is a space gap, and the sum of the space gap and the stop gap of the hourglass shaped spring assembly (6) can be configured to be equal to a maximum sinking amount that the car body is allowed.

2. The air spring for rail transit according to claim 1, wherein the position-limiting component (4) further comprises an upper end plate (41) arranged on a top surface of the hourglass shaped spring (10), the upper end plate (41) is hermetically connected to the air bag (2), and the upper end plate (41) is fixedly connected to the hard boss (42).

3. The air spring for rail transit according to claim 2, wherein a lower surface of the upper end plate (41) is inclined downwards from an edge to the center.

4. The air spring for rail transit according to claim 2, wherein the upper end plate (41) is a separated structure, comprising a first part hermetically connected to the air bag (2) and a second part connected to the hourglass shaped spring (10), and the first part is fixedly connected to the second part.

5. The air spring for rail transit according to any one of claims 1 to 4, wherein an axisymmetric cavity is provided at a bottom of the hourglass shaped spring (10), and a lower end of the hard boss (42) extends to the cavity, and the cavity is symmetrical with respect to the axis of the hourglass shaped spring (10).

6. The air spring for rail transit according to claim 5, further comprising a bottom plate (8) configured to support the hourglass shaped spring (10), wherein the bottom plate (8) is connectable to a bogie.

7. The air spring for rail transit according to claim 6, further comprising a lower end plate (7) provided between the bottom plate (8) and the hourglass shaped spring (10), wherein the lower end plate (7) is fixedly connected to the bottom plate (8).

8. The air spring for rail transit according to claim 7, wherein the lower end plate (7) is provided with a through hole, and the through hole has a size and a shape which are the same as those of a bottom end of the cavity, and the bottom plate (8) is provided with a vent in communication with the cavity.

9. The air spring for rail transit according to claim 8, wherein an upper surface of the lower end plate (7) is inclined downwards from an edge to the center, and a bottom surface of the hourglass shaped spring (10) and the upper surface of the lower end plate (7) fit together.

10. The air spring for rail transit according to claim 9, wherein the position-limiting component (4) and the hourglass shaped spring (10) are connected by vulcanization, and the lower end plate (7) and the hourglass shaped spring (10) are connected by vulcanization.

## Patentansprüche

1. Luftfeder für den Schienenverkehr, umfassend:
eine obere Platte (1), die fest mit einem Wagenkasten verbunden ist; und
ein Luftkissen (2), das hermetisch fest mit der oberen Platte (1) verbunden ist;
und ferner umfassend:
eine sanduhrförmige Federbaugruppe (6), die hermetisch mit dem Luftkissen (2) verbunden ist, wobei die sanduhrförmige Federbaugruppe (6) eine sanduhrförmige Feder (10) und eine positionsbegrenzende Komponente (4) umfasst, die innerhalb der sanduhrförmigen Feder (10) angeordnet ist, wobei die Form der sanduhrförmigen Feder (10) eine sanfte Wölbung ist, die ein kleines oberes Ende hat und sich allmählich nach unten zu einem größten Abschnitt erweitert und sich dann weiter allmählich zu einem unteren Ende hin verringert, und die positionsbegrenzende Komponente (4) einen harten Vorsprung (42) umfasst, der sich nach unten erstreckt; und
der harte Vorsprung (42) eine Höhe hat, die kleiner als die Höhe der sanduhrförmigen Feder (10) ist, ein Höhenunterschied zwischen dem harten Vorsprung (42) und der sanduhrförmigen Feder (10) ein Anschlagspalt der sanduhrförmigen Federbaugruppe (6) ist, ein Spalt zwischen der oberen Platte (1) und der sanduhrförmigen Federbaugruppe (6) ein Raumspalt ist und die Summe des Raumspaltes und des Anschlagspaltes der sanduhrförmigen Federbaugruppe (6) so konfiguriert werden kann, dass sie einem maximalen Absenkbetrag gleicht, der für den Wagenkasten zulässig ist.

2. Luftfeder für den Schienenverkehr nach Anspruch 1, wobei die positionsbegrenzende Komponente (4) ferner eine obere Endplatte (41) umfasst, die auf einer Oberseite der sanduhrförmigen Feder (10) angeordnet ist, die obere Endplatte (41) hermetisch mit dem Luftkissen (2) verbunden ist und die obere Endplatte (41) fest mit dem harten Vorsprung (42) verbunden ist.

3. Luftfeder für den Schienenverkehr nach Anspruch 2, wobei eine Unterseite der oberen Endplatte (41) von einer Kante zur Mitte nach unten geneigt ist.

4. Luftfeder für den Schienenverkehr nach Anspruch 2, wobei die obere Endplatte (41) eine getrennte Struktur ist, die einen ersten Teil umfasst, der hermetisch mit dem Luftkissen (2) verbunden ist, und einen zweiten Teil, der mit der sanduhrförmigen Feder (10) verbunden ist, und der erste Teil fest mit dem zweiten Teil verbunden ist.

5. Luftfeder für den Schienenverkehr nach einem der Ansprüche 1 bis 4, wobei ein achsensymmetrischer Hohlraum an einem Boden der sanduhrförmigen Feder (10) vorgesehen ist und sich ein unteres Ende des harten Vorsprungs (42) zu dem Hohlraum erstreckt, und der Hohlraum in Bezug auf die Achse der sanduhrförmigen Feder (10) symmetrisch ist.

6. Luftfeder für den Schienenverkehr nach Anspruch 5, ferner umfassend eine Bodenplatte (8), die konfiguriert ist zum Tragen der sanduhrförmigen Feder (10), wobei die Bodenplatte (8) mit einem Drehgestell verbunden werden kann.

7. Luftfeder für den Schienenverkehr nach Anspruch 6, ferner umfassend eine untere Endplatte (7), die zwischen der Bodenplatte (8) und der sanduhrförmigen Feder (10) vorgesehen ist, wobei die untere Endplatte (7) fest mit der Bodenplatte (8) verbunden ist.

8. Luftfeder für den Schienenverkehr nach Anspruch 7, wobei die untere Endplatte (7) mit einem Durchgangsloch versehen ist und das Durchgangsloch eine Größe und Form aufweist, die denen eines unteren Endes des Hohlraums entsprechen, und die Bodenplatte (8) mit einer Entlüftung versehen ist, die in Kommunikation mit dem Hohlraum steht.

9. Luftfeder für den Schienenverkehr nach Anspruch 8, wobei eine Oberseite der unteren Endplatte (7) von einer Kante zur Mitte nach unten geneigt ist, und eine Unterseite der sanduhrförmigen Feder (10) und die Oberseite der unteren Endplatte (7) zusammenpassen.

10. Luftfeder für den Schienenverkehr nach Anspruch 9, wobei die positionsbegrenzende Komponente (4) und die sanduhrförmige Feder (10) durch Vulkanisation verbunden sind und die untere Endplatte (7) und die sanduhrförmige Feder (10) durch Vulkanisation verbunden sind.

## Revendications

1. Ressort pneumatique pour transport ferroviaire, comprenant :
une plaque supérieure (1) pouvant être reliée rigidement à une carrosserie ; et
un coussin gonflable (2) relié hermétiquement à la plaque supérieure (1) ;
et comprenant en outre :
un ensemble de ressort en forme de sablier (6) relié hermétiquement au coussin gonflable (2), l'ensemble de ressort en forme de sablier (6) comprenant un ressort en forme de sablier (10) et un composant de limitation de position (4) disposé à l'intérieur du ressort en forme de sablier (10), la forme du ressort en forme de sablier (10) est une cambrure lisse, qui a une petite extrémité supérieure, et s'étend progressivement vers le bas jusqu'à une plus grande partie, puis est progressivement diminuée vers une extrémité inférieure, et le composant de limitation de position (4) comprend un bossage dur (42) s'étendant vers le bas ; et
le bossage dur (42) a une hauteur inférieure à une hauteur du ressort en forme de sablier (10), une différence de hauteur entre le bossage dur (42) et le ressort en forme de sablier (10) est un écart de butée de l'ensemble de ressort en forme de sablier (6), un écart entre la plaque supérieure (1) et l'ensemble de ressort en forme de sablier (6) est un écart d'espace, et la somme de l'écart d'espace et de l'écart de butée de l'ensemble de ressort en forme de sablier (6) peut être configurée pour être égale à une quantité d'enfoncement maximale autorisée par la carrosserie.

2. Ressort pneumatique pour transport ferroviaire selon la revendication 1, dans lequel le composant de limitation de position (4) comprend en outre une plaque d'extrémité supérieure (41) disposée sur une surface supérieure du ressort en forme de sablier (10), la plaque d'extrémité supérieure (41) est reliée hermétiquement au coussin gonflable (2), et la plaque d'extrémité supérieure (41) est reliée rigidement au bossage dur (42).

3. Ressort pneumatique pour transport ferroviaire selon la revendication 2, dans lequel une surface inférieure de la plaque d'extrémité supérieure (41) est inclinée vers le bas depuis un bord vers le centre.

4. Ressort pneumatique pour transport ferroviaire selon la revendication 2, dans lequel la plaque d'extrémité supérieure (41) est une structure séparée, comprenant une première partie reliée hermétiquement au coussin gonflable (2) et une seconde partie reliée au ressort en forme de sablier (10), et la première partie est reliée rigidement à la seconde partie.

5. Ressort pneumatique pour transport ferroviaire selon l'une quelconque des revendications 1 à 4, dans lequel une cavité axisymétrique est prévue au fond du ressort en forme de sablier (10), et une extrémité inférieure du bossage dur (42) s'étend jusqu'à la cavité, et la cavité est symétrique par rapport à l'axe du ressort en forme de sablier (10).

6. Ressort pneumatique pour transport ferroviaire selon la revendication 5, comprenant en outre une plaque inférieure (8) configurée pour supporter le ressort en forme de sablier (10), la plaque inférieure (8) pouvant être reliée à un bogie.

7. Ressort pneumatique pour transport ferroviaire selon la revendication 6, comprenant en outre une plaque d'extrémité inférieure (7) prévue entre la plaque inférieure (8) et le ressort en forme de sablier (10), la plaque d'extrémité inférieure (7) étant reliée rigidement à la plaque inférieure (8).

8. Ressort pneumatique pour transport ferroviaire selon la revendication 7, dans lequel la plaque d'extrémité inférieure (7) est pourvue d'un trou débouchant, et le trou débouchant a une taille et une forme qui sont identiques à celles d'une extrémité inférieure de la cavité, et la plaque inférieure (8) est pourvue d'un évent en communication avec la cavité.

9. Ressort pneumatique pour transport ferroviaire selon la revendication 8, dans lequel une surface supérieure de la plaque d'extrémité inférieure (7) est inclinée vers le bas depuis un bord vers le centre, et une surface inférieure du ressort en forme de sablier (10) et la surface supérieure de la plaque d'extrémité inférieure (7) s'emboîtent.

10. Ressort pneumatique pour transport ferroviaire selon la revendication 9, dans lequel le composant de limitation de position (4) et le ressort en forme de sablier (10) sont reliés par vulcanisation, et la plaque d'extrémité inférieure (7) et le ressort en forme de sablier (10) sont reliés par vulcanisation.
